**Europäisches Patentamt**

(19) **European Patent Office**

**Office européen des brevets**

(11) Publication number : **0 315 653 B1**

(12) ## EUROPEAN PATENT SPECIFICATION

(45) Date of publication of patent specification :
**22.07.92 Bulletin 92/30**

(51) Int. Cl.⁵ : **G06F 11/22**

(21) Application number : **88901747.1**

(22) Date of filing : **16.12.87**

(86) International application number :
**PCT/US87/03381**

(87) International publication number :
**WO 88/04807 30.06.88 Gazette 88/14**

(54) **REMOTE SERVICES CONSOLE FOR DIGITAL DATA PROCESSING SYSTEM.**

(30) Priority : **18.12.86 US 943903**

(43) Date of publication of application :
**17.05.89 Bulletin 89/20**

(45) Publication of the grant of the patent :
**22.07.92 Bulletin 92/30**

(84) Designated Contracting States :
**AT BE CH DE FR GB IT LI LU NL SE**

(56) References cited :
**US-A- 3 585 599**
**US-A- 4 225 918**
**US-A- 4 481 574**
**US-A- 4 680 788**
**Hewelett-Packard Journal, vol. 30, no. 9, September 1979, (Amstelveen, NL), D.L. Nelson: "A remote computer troubleshootingfacility", pages 13-16**

(73) Proprietor : **DIGITAL EQUIPMENT CORPORATION**
**146 Main Street**
**Maynard, MA 01754 (US)**

(72) Inventor : **WU, Huifeng, E.**
**8 Armand Drive**
**Chelmsford, MA 01824 (US)**
Inventor : **KENNEDY, Bradford**
**143 Canterbury Drive**
**Lunenburg, MA 01462 (US)**
Inventor : **BERTHIAUME, Kenneth, W.**
**52 Fryeville Road**
**Orange, MA 01364 (US)**

(74) Representative : **Goodman, Christopher et al**
**Eric Potter & Clarkson St. Mary's Court St.**
**Mary's Gate**
**Nottingham NG1 1LE (GB)**

EP 0 315 653 B1

## Description

### 1. Field of the Invention

The invention relates generally to the field of digital data processing (computer) systems, and more particularly to a communications console for connection to a computer system to enable communications with a remote location over, for example, a public telephone switching network. The communications console facilitates remote maintenance and diagnosis of the computer system and also can be used to download software updates, while maintaining system security by inhibiting unauthorized access to the system.

### 2. Description of the Prior Art

Over the past several years, businesses and other computer users have come to rely more and more on computer systems for many operations, from engineering, design and manufacturing of products to billing, accounting and management. Computer systems themselves have also become more reliable. However, they do often require maintenance and diagnosis of such hardware and software problems as do develop.

As computer hardware and software have become more diverse and complex, the requirements of maintenance and diagnosis have also become more complex. In the past, when a problem has arisen, a field service engineer has gone to the computer site, and run diagnostic tests on the system to determine the source of the problem. The diagnostic tests generally provided sufficient information to allow him or her to fix the system. Modern software diagnostic programs often isolate the source of the failure, particularly if the failure is in the hardware. Such tests would typically identify at least the circuit board with the faulty circuit, and the field service engineer could then replace the board if he had one with him. If he did not have a replacement board, he would have to get one, which would necessitate another service trip. In any event, providing all of the field service engineers with replacements for boards having the greatest likelihood of failing would be extremely costly, not only in the boards themselves, but also in the automobiles or trucks required to transport them to the customer's location.

If the problem was in the software, however, running diagnostic tests could often be difficult, and oftentimes fixing the problem would require help from experts in the software involved. In any event, fixing a problem with the software should not require the actual presence of a field service engineer, since no replacement of a physical component would be required.

Accordingly, recently attempts have been made to provide remote services for computer systems for maintenance and diagnostic purposes. The service provider may maintain a central location from which services may be provided to a number of widely scattered computer sites. In the event of a malfunction, service may be initially provided from that central location. That is, the central location may communicate with the computer site to run and monitor the maintenance and diagnostic programs, so that a field service engineer, if and when he visits the computer site, knows the likely source of the malfunction. If necessary, he also may have been able to confer with others, in particular the system designers, to identify the problem. Furthermore, when the malfunction is in the hardware, the engineer need take with him only the malfunctioning board or boards, as identified by the maintenance and diagnostic programs, when he goes to the computer site. In addition, if the problem is in the software, new software or software fixes or updates may be provided over the communications link, and the field service engineer would not have to visit the computer site at all.

Several problems arise, however, if the remote services are provided over the public telephone switching network, which is the most economical vehicle for providing such services. First, provision must be made for the computer system to communicate with the telephone network, which may also provide a pathway for unauthorised individuals to access the computer system. Furthermore, the telephone network itself is noisy, and so provisions must be made to ensure integrity of the information that is transferred over the network.

Systems for providing remote service facilities for computer systems, communicating over, for example, a public telephone switching network have been described in the prior art, for example, US-A-3 585 599, US-A-4 225 918, and Hewlett-Packard Journal, Vol. 30, No. 9, Sept., 1979. Such systems describe the use of a remote services console which communicates with a remote communication means, with the two cited patent documents further disclosing communications data and commands, including the possibility of a protocol command.

### SUMMARY OF THE INVENTION

The invention as defined in the claims provides a new and improved remote services console for providing remote services to a computer system over a public telephone switching network.

In brief summary, the invention provides a remote services console which connects to the console port of the computer system's central processor unit (CPU), and also to the telecommunications port of the system if one is provided. The remote services console has a port for transmitting and receiving information over the public telephone switching network, which port may be disabled by a hardware switch by a local system operator white remote services are not being provided to enhance system security. Finally the remote services console has a port for sending information to and receiving information from a local console terminal.

The remote services console has three primary connection modes. In a normal connection mode, the CPU console port communicates directly with only the console terminal and the computer system's telecommunications port, if one is provided, communicates directly with the remote services console telecommunications port to facilitate transferring information between the computer system's telecommunications port and the public telephone switch network. In a variation of the normal connection mode, the telecommunications port may be isolated from the public telephone switch network to ensure that no unauthorized access is made of the computer system.

In the other connection modes, either the system telecommunications port or the CPU console port transfers information with the remote services provider over the public telephone switch network through the remote services console telecommunications port by means of a microprocessor that communicates with the remote service provider using a protocol to ensure the integrity of the transferred information. When the communications are with the CPU console port, the local console terminal also may receive the information communicated, and may transmit information to the remote services provider by means of the microprocessor.

## BRIEF DESCRIPTION OF THE DRAWINGS

This invention is pointed out with particularity in the appended claims. The above and further advantages of this invention may be better understood by referring to the following description taken in conjunction with the accompanying drawings, in which:

Fig. 1 is a schematic block diagram showing the interconnection of a remote services console constructed in accordance with the invention with a computer system, console terminal and public telephone switch network;

Fig. 2, comprising Figs. 2A through 2C, detail the internal connections within the remote services console among the computer system's CPU console port and telecommunications port, the public telephone switch network and the system console terminal;

Fig. 3, comprising Figs. 3A and 3B, is a block schematic diagram of the new remote services console constructed in accordance with the invention.

## DETAILED DESCRIPTION OF AN ILLUSTRATIVE EMBODIMENT

General Description

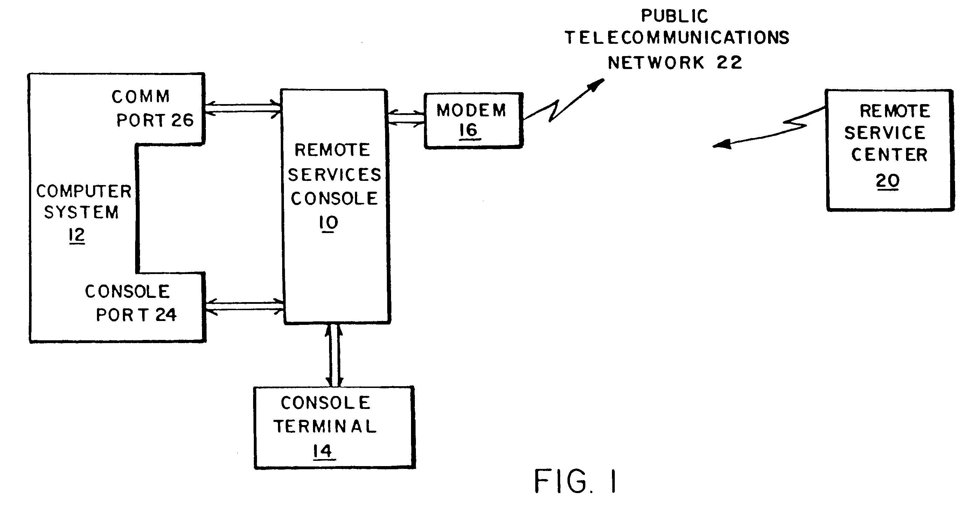

With reference to Fig. 1, a remote services console 10 connects to a computer system 12, a console terminal 14 and a modem 16 for facilitating the transfer of information between the computer system 12 and console terminal 14, on the one hand, and a remote services center 20, on the other hand, over the public telecommunications network 22. The communications may be for the purpose of maintenance and diagnosis of the computer system 12, to determine whether the computer system 12 is operating properly, and to determine the cause of any malfunctions so that they can be easily repaired by service personnel. In addition, the communications may be for the purpose of downloading software updates from the remote services center 20, which is currently often done by maintenance personnel physically taking the updates to the system.

One specific embodiment of a computer system 12 with which the remote services console 10 is used has two ports through which communications can be affected, namely, a console port 24 and a communications port 26. In the absence of the remote services console 10, the console port would typically be connected to the console terminal 14, which allows an operator physically located at the site of the computer system 12 to perform typical operator's duties, which include initializing the system through a bootstrap procedure, examining and depositing data, stepping the system through a sequence of program instructions, and halting the system. The communications port 26 comprises a port for providing standard asynchronous communications. Typically, a user or applications program transfers information through the communications port 26 and not the console port 24. Generally, the console port 24 may be accessed by the operating system, but not by user or applications programs.

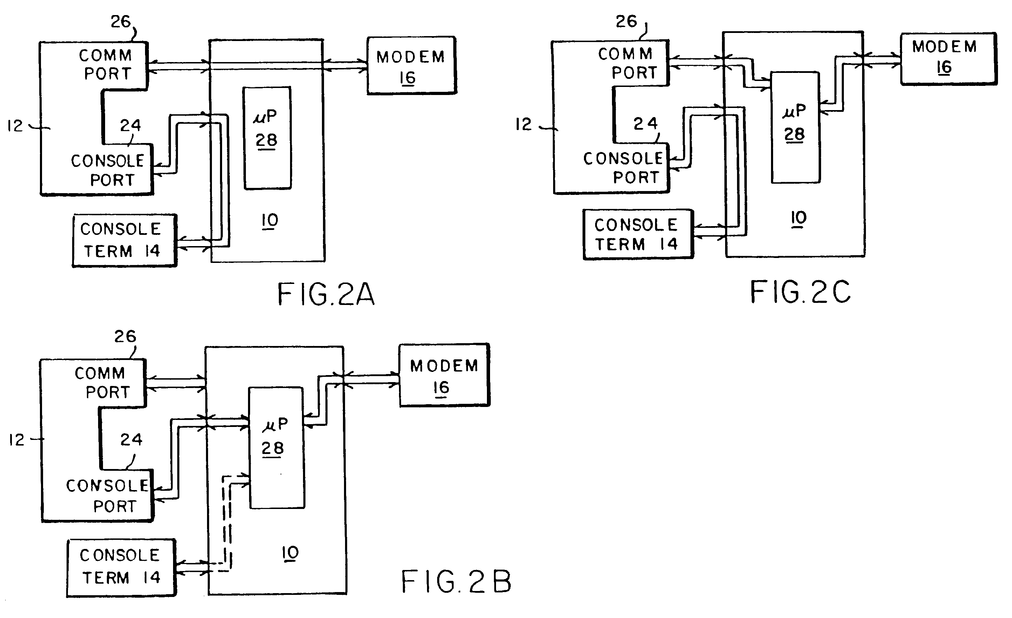

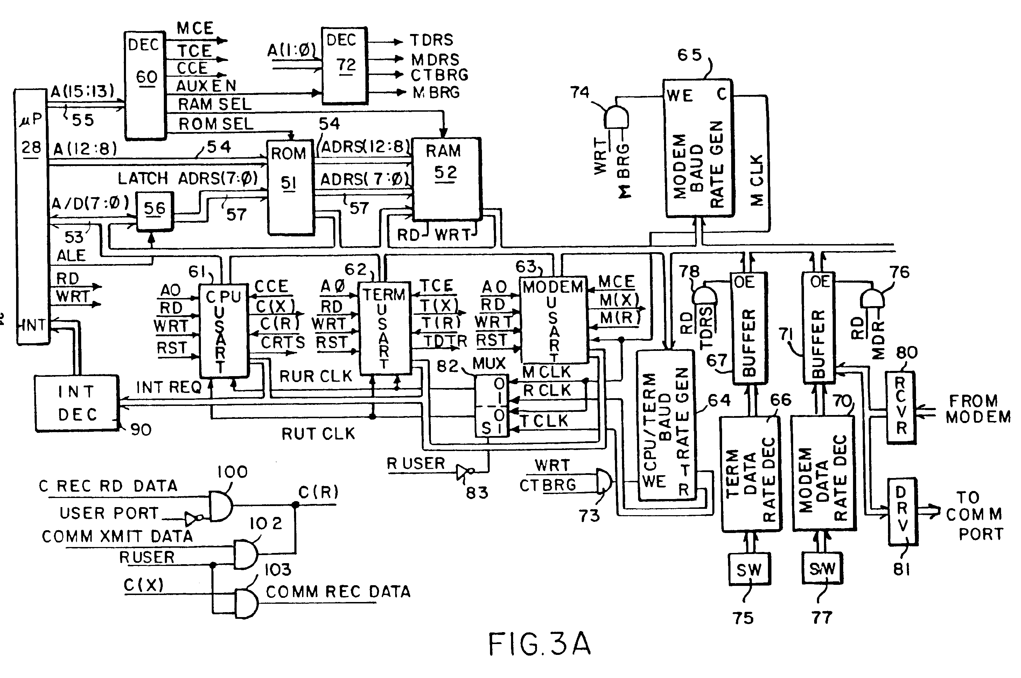

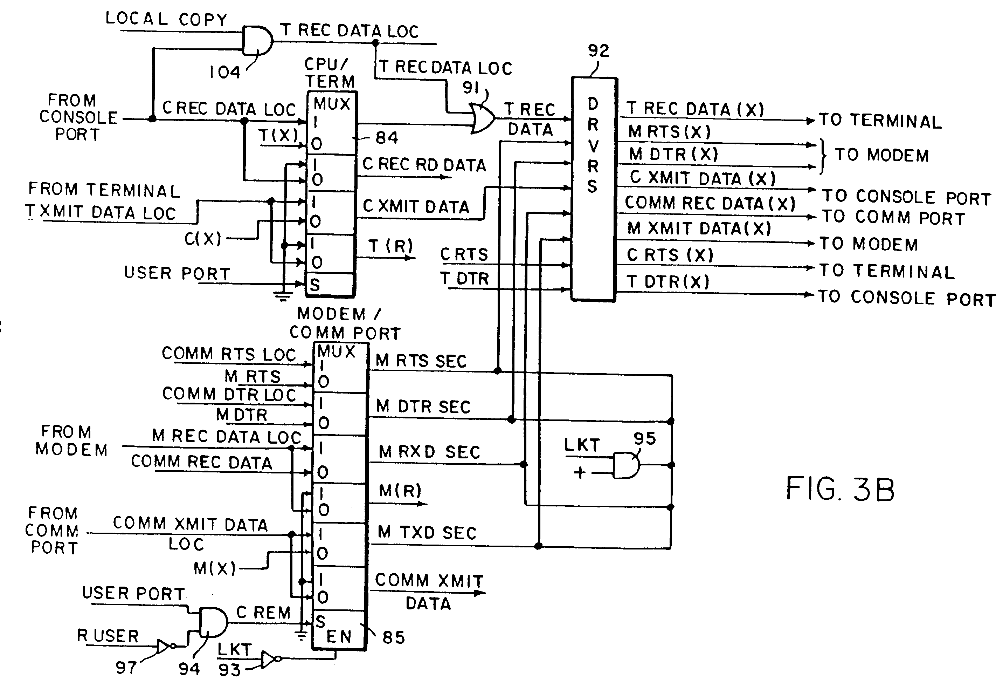

The remote services console 10 operates in a plurality of operating modes to provide communications among the console port 24, communications port 26, console terminal 14, and, through modem 16 and public telecommunications network 22, the remote services center 20. The operating mode is selected by an operating mode switch (described below in connection with Fig. 3) on the remote services console 10. The connections in each of three general operating modes are depicted in Fig. 2. With reference to Fig. 2A, when the remote services console 10 is in a "user port" operating mode, the remote services console 10 provides communications between the console port 24 and the console terminal 14, and between the communications port 26 and the modem 16. That is, information passes directly between the console port 24 and the console terminal 14 and directly between the communications port 26 and the modem 16. A microprocessor 28 in the remote services console 10 is not used during this mode.

A "lockout" operating mode is similar to the "user port" operating mode depicted in Fig. 2A, except that no communications is provided between the communications port 26 and the modem 16. This prevents any unauthorized access of the computer system 12 over the public telecommunications network 22.

Fig. 2B depicts the connections in a "remote" operating mode. In this mode, there are no communications to or from the communications port 26. All communications with the computer system 12 are through the console port 24. Communications are provided between the console port 24 and the modem 16 through the microprocessor 28. The microprocessor 28 receives information from the console port 24 and transfers it to the remote services center 20 through the modem 16 in a preselected protocol to minimize the possibility of loss or corruption of the information as it is being transferred over the public telecommunications network 22. In addition, the microprocessor 28 receives the information originating from the remote services center 20 in a preselected protocol to ensure the integrity of the received information.

When the remote services console 10 is in the remote operating mode, if a local copy switch (described below in connection with Fig. 3) is set, the microprocessor 28 also sends the communications between the console port 24 and the remote services center 20 to the console terminal 14 for inspection by the system operator.

Fig. 2C depicts the connections in a "remote user" operating mode. In that mode, the console port 24 communicates directly with the console terminal 14 through the remote services console 10, and the communications port 26 communicates through the microprocessor 28 and modem 16 with the remote services center 20. In this mode, the microprocessor 28 also provides the communications protocol to maintain the integrity of the transferred information.

The information, termed "communications data" transmitted by the remote services console to the remote services center may originate from the communications port in the user port and the remote user operating modes and from the console port 24 and console terminal in the remote operating mode. Thus, in the remote operating mode a system operator located at the computer system 12 may transmit messages to the remote services center 20 when the remote services console 10 is operating in the remote operating mode. The operator controls the remote services console by setting the various switches, including the switch that determines the operating mode, the local copy switch and the lockout switch. The remote services center 20 also transmits communications data which is received in the communications port 26, console port 24 and/or the console terminal 14, depending on the operating mode.

The remote services center 20 may also transmit command information which controls some aspects of the operation of the remote services console 10 when it is operating in the remote or remote user operating modes. For example, the remote services center 20 may enable the remote services console 10, and particularly microprocessor 28, to transmit communications data to and from the console terminal 14 if the local copy switch is not conditioned to allow it, so that the remote services center may transmit messages, and receive responses from, the operator of system 12. In addition, the remote services center 20 may transmit command information to the remote services console which places the microprocessor 28 in a protocol mode. In that mode, the remote services console appends protocol data when it sends communications data to the remote services center, and it strips protocol data from the communications data before sending it the remaining communications data to the communications port 26, console port 24 and/or console terminal 14.

## Specific Description Of Remote Services Console

### 1. Structure (Figs. 3A and 3B)

Fig. 3, comprising Figs. 3A and 3B, depicts a detailed logic diagram of a remote services console constructed in accordance with the invention. With reference to Fig. 3A, the remote services console 10 is controlled by a microprocessor 28 which has a program and program data stored in a read-only memory (ROM) 51 and a read/write random access memory (RAM) 52. In one embodiment, the microprocessor transmits sixteen address signals in parallel and eight data signals in parallel. In that embodiment, connected to the microprocessor are three sets of lines for carrying data and address signals. In particular, one set of lines 53 carries multiplexed A(7:0) low order address signals and D(7:0) data signals. A second set of lines 54 carries address signals A(12:8) and a third set of lines 55 carries high-order address signals A(15:13).

In a transfer to or from the microprocessor 28, the microprocessor first transmits the A(15:0) address signals [which comprises the A(15:13) high order address signals, the A(12:8) address signals, and the A(7:0) low order address signals) over lines 53, 54 and 55. A short time thereafter, sufficient to allow the signals to settle, the microprocessor 28 asserts an ALE address lines enable signal, which enables a latch 56 to receive and store the A(7:0) low order address signals. The latch transmits the latched A(7:0) low order address signals onto lines 57 to ROM 51 and RAM 52. The microprocessor then is free to remove the A(7:0) low order address signals from lines 53.

At some point in a transfer, the microprocessor asserts either a RD read enable signal or a WRT write enable signal, which indicate the direction of transfer with respect to the microprocessor. If the transfer is from the microprocessor, it asserts the WRT write enable, and if the transfer is to the microprocessor, it asserts the RD read enable signal.

The A(15:13) high order address signals are coupled to a decoder 60 which generates enabling signals to determine the circuit with respect to which the transfer, which was initiated by the microprocessor 28, is to be concluded. In particular, the decoder 60 generates a ROM SEL read-only memory select signal if the A(15:13) high order address signals indicate that the transfer is to be to or from the ROM 51, or a RAM SEL random access memory select signal if the transfer is to be to or from RAM 52.

In addition, if the A(15:13) high order address signal indicates that a transfer is to be to or from a CPU USART (Universal Synchronous/Asynchronous Receiver and Transmitter) 61, decoder 60 asserts a CCE (CPU communications enable) signal. If the A(15:13) high order address signal indicates that a transfer is to be to or from a terminal USART 62, the decoder 60 asserts a TCE terminal communications enable signal. If the A(15:13) high order address signal indicates that a transfer is to be to or from a modem USART 63, the decoder 60 asserts a MCE modem communications enable signal. If either the CCE (CPU communications enable) signal, the TCE terminal communications enable signal, or the MCE modem communications enable signal is asserted, and the RD read enable signal is also asserted, the indicated USART transmits a byte of data (that is, eight data bits) over the lines 53 as D(7:0) data signals. On the other hand, if the CCE (CPU communications enable) signal, the TCE terminal communications enable signal, or the MCE modem communications enable signal is asserted and the WRT write enable signal is also asserted, the indicated USART receives and latches a byte of data transmitted by the microprocessor.

In addition, in response to a selected encoding of the A(15:13) high order address signals, the decoder 60 generates an AUX EN auxiliary decoder enable signal, which enables a decoder 72. When enabled by the AUX EN auxiliary decoder enable signal, the decoder 72 asserts one of four enabling signals, depending on the encoding of the A(1:0) address signals, which enable circuits depicted on Fig. 3A to receive or transmit data signals from or to the microprocessor. In particular, in response to one encoding of the A(1:0) address signals, decoder 72 asserts a CTBRG (CPU/terminal baud rate generator) enabling signal. If the WRT write signal is also asserted, an AND gate 73 is energized to assert a signal which enables a CPU/terminal baud rate generator 64 to receive D(7:0) data signals over lines 53. The CPU/terminal baud rate generator generates timing signals RCLK receive clock and TCLK transmit clock which are used to synchronize communications between the remote services console 10 (Fig. 1) and both the CPU console port and the console terminal.

In response to a second encoding of the A(1:0) address signals, decoder 72 asserts an MBRG modem baud rate generator signal. If the WRT write enable signal is also asserted, an AND gate 74 is energized to assert a signal which enables a modem baud rate generator 65 to receive D(7:0) data signals over lines 53. The modem baud rate generator 65 generates an MCLK modem clock signal, which is used to synchronize communications between the modem 16 (Fig. 1) and the remote services console 10.

Similarly, in response to a third encoding of the A(1:0) address signals, decoder 72 asserts a TDRS terminal data rate switch signal. If the RD read enable signal is also asserted an AND gate 78 is energized which enables a buffer 67 to transmit, as D(7:0) data signals, signals representing the state of a set of terminal data rate switches 75. The condition of the switches is decoded in a terminal data rate decoder 66, which generates the data signals which are transmitted. The terminal data rate switches 75 are set by an operator to indicate the rate at which data is transferred to and from the console terminal 14 and to and from the CPU console port 24 (Fig. 1).

Finally, in response to a fourth encoding of the A(1:0) address signals, decoder 72 asserts an MDRS modem data rate switch signal. If the RD read enable signal is also asserted, an AND gate 76 is energized to enable a buffer to transmit, as D(3:0) data signals, signals representing the condition of a set of modem data rate switches 77. The condition of the switches is decoded in a modem data rate decoder 70, which generates the data signals which are transmitted. The modem data rate switches 77 are set by an operator to indicate the rate at which data is transferred to and from the modem 16 and to and from the communications port 26 (Fig. 1).

In addition, when enabled by the energized AND gate 76, the buffer 71 couples several signals from a set of receivers 80, which receives signals from the modem 16 (Fig. 1) onto line 53 as D(7:4) data signals. In particular, the signals received through receivers 80 include CD carrier detect, RI ring indicator, CTS clear to send, and DSR data set ready signals. These signals form part of the EIA Standard RS-232-C (CCITT recommendation V24) asynchronous signaling protocol which is used to transfer data between the remote services console 10 and the modem 16, console terminal 14, communications port 26 and console port 24 (Fig. 1). The signals from receivers 80 are also transmitted through drivers 81 directly to the communications port 26.

The USARTs (Universal Synchronous/Asynchronous Receivers and Transmitters) 61, 62 and 63 are conventional circuits which are used to receive and generate signals which enable data to be transmitted between the microprocessor and the modem 16, console terminal 14, and console port 24. Depending on the operating mode, as described above in connection with Figs. 2A, 2B and 2C, the USART 61 handles communications with the CPU console port 24 or the communications port 26. If the remote services console 10 (Fig. 1) is operating in the remote operating mode, the USART 61 handles communications with the CPU console port 24, and if it is operating in the remote user operating mode, the USART 61 handles communications with the communications port 26. The USART 62 handles communications with the console terminal 14, and the USART 63 handles communications with the modem 16.

As described above, the USARTs can receive data from and transmit data to the microprocessor 28 over lines 53. The data may comprise communications data to be transmitted to or that has been received from the console terminal 14, modem 16, console port 24 or communications port 26, or it may comprise control information which is used in a conventional manner to control the USART or which comprises status information concerning the operating status of the USART. The A(0) address signal governs whether the data transferred is to be communications data or control data.

USARTs 61 and 62 operate in synchronism with RUR CLK remote user receive clock and RUT remote user transmit clock signals from a multiplexer 82. The multiplexer is controlled by the complement of an R USER remote user signal, which is complemented in an inverter 83. If the R USER remote user signal is negated, multiplexer 82 couples the TCLK transmit clock and RCLK receive clock signals from CPU/terminal baud rate generator 64 to USARTs 61 and 62 as the RUR and RUT timing signals. If, on the other hand, the R USER signal is asserted, inverter 83 enables the multiplexer 82 to couple an MCLK modem clock signal from the modem baud rate generator 65 to USARTs 61 and 62 as both the RUR and RUT timing signals. USART 63 operates in synchronism with the MCLK signal from the modem baud rate generator 65 regardless of the condition of the R USER remote user signal.

The USARTs 61, 62 and 63 generate INT REQ interrupt request signals which are coupled to an interrupt decoder 90. In response to the INT REQ interrupt request signals, the interrupt decoder generates signals which interrupt the microprocessor 28. Interrupt service is requested by the USARTs to enable them to transmit received communications data to the microprocessor 28, or to obtain from the microprocessor 28 communications data to be transmitted.

2. Operation

1. User Port Operation (Fig. 2A)

The remote services console 10 (Fig. 1) receives a C REC DATA LOC (CPU receive data local) data signal from the CPU console port 24 and a T XMIT DATA LOC terminal transmit data local signal from the console terminal 14 in a CPU/terminal multiplexer 84, and an M REC DATA LOC modem receive data local signal from the modem 16 and a COMM XMIT DATA LOC communications port transmit data local signal in a modem/communications port multiplexer 85. If the remote services console is operating in the user port mode, as illustrated in Fig. 2A, the USER PORT signal is asserted, and an R USER remote user signal is negated. In that condition, the multiplexer 84 is conditioned to couple the C REC DATA LOC (CPU received data local) signal to one input of an OR gate 91. The OR gate, in turn, couples the signal from the multiplexer 84 as a T REC DATA terminal receive data signal. A driver in a set of drivers 92 in turn, transmits the T REC DATA signal to the data input terminal of terminal 14 as a T REC DATA (X) terminal receive data (transmitted) signal.

Also, with the USER PORT signal asserted and the R USER remote user signal negated, multiplexer 84 is enabled to couple the T XMIT DATA LOC terminal transmit data local signal from the terminal 14 to drivers 92 as a C XMIT DATA (CPU transmit data) signal. The drivers 92 then transmit the signal to the console port 24 as a C XMIT DATA (X) (CPU transmit data) transmitted signal. Thus, in response to the assertion of the USER PORT signal, the multiplexer 84 provides the required direct coupling of the data signals between the console port 24 and the console terminal 14 as depicted in Fig. 2A.

In addition, if a LKT lockout signal is not asserted, an inverter 93 enables multiplexer 85. In addition, the negated LKT lockout signal de-energizes an AND gate 95. Since the R USER remote user signal is negated, an inverter 97 energizes an AND gate 94. Since the USER PORT signal is also asserted, AND gate 94 is enabled to generate a C REM computer remote signal which energizes the S select terminal of the multiplexer 85. In response, the multiplexer couples the M REC DAT LOC modem received data local signal from the modem to drivers 92 as an M RXD SEC modem received data secure signal. The multiplexer 85 also couples the COMM XMIT DATA LOC communications port transmitted data local signal from the communications port to the drivers 92 as an M TXD SEC modem transmitted data secure signal. The drivers 92 couple these signals to the communications port and modem, respectively, as a COMM REC DATA (X) communications port receive data (transmitted) signal and an M XMIT DATA (X) modem transmit data (transmitted) signal. Thus, in response to the assertion of the USER PORT signal, the multiplexer 85 provides the required direct coupling of the data signals between the communications port 26 and the modem 16 as depicted in Fig. 2A.

The modem/communications port multiplexer 85 also serves to couple the various RS-232-C control signals between the modem 16 and the communications port 26, including the RTS request-to-send, and DTR data-terminal-ready control signals. In particular, the multiplexer receives a COMM RTS LOC communications port request-to-send (local) signal and couples it to drivers 92 as an M RTS SEC modem request-to-send secure signal. Similarly, the multiplexer 85 receives a COMM DTR LOC communications port data-terminal-ready local signal, which it couples to drivers 92 as an M DTR SEC modem data-terminal-ready secure signal. The drivers 92 couple these signals to the modem 16 as an M RTS (X) modem request-to-send (transmitted) signal and an M DTR (X) modem data-terminal-ready (transmitted) signal, respectively.

In addition, while in the user port operating mode, negated level signals are coupled by multiplexer 84 as a C REC RD DATA computer received read data signal, a T(R) terminal received signal, an M(R) modem received signal and COMM XMIT DATA communications port transmit data signals. The T(R) terminal received and M(R) modem received signals are coupled to USARTs 62 and 63, respectively, as received communications data signals. The C REC RD DATA computer received read data signal is coupled to an AND gate 100 (Fig. 3A). Since the USER PORT signal is asserted, an inverter 101 disables the AND gate 100. The COMM XMIT DATA communications port transmit data signal is coupled to an AND gate 102, which is also disabled by the negated R USER remote user signal. The outputs of the AND gates 100 and 102 are connected together in a wired-OR configuration to generate a C(R) computer received signal, which is coupled to the USART 61 as a received data signal.

It will be appreciated that, if the LKT lockout signal is asserted, inverter 93 couples a disabling signal to the enable terminal of multiplexer 85. In addition, AND gate 95 is energized to transmit the m RTS SEC modem request-to-send secure, M DTR SEC modem data-terminal-ready secure, M RXD SEC modem receive data secure, and M TXT SEC modem transmit data secure signals, at a constant asserted signal level so that the signals do not float when the multiplexer 85 is disabled. Thus, when the LKT lockout signal is asserted, the remote services console 10 is effectively disabled from transmitting any data to or receiving data from the modem 16. In addition, the remote services console 10 will not respond to signals asserted by the modem 16, thereby effectively preventing the modem from responding to an incoming call or initiating an outgoing call over public telecommunications network 22.

2. Remote Operation (Fig. 2B)

When both the USER PORT and the R USER remote user signals are negated, the remote services console 10 (Fig. 1) operates in the remote operating mode depicted in Fig. 2B. In that mode, the remote services console, by means of microprocessor 28, transfers communications data between the console port 24 and the remote services center 20 through modem 16. In addition, the operator may enter data at the console terminal 14 which is transmitted to the remote services center 20. If enabled, the microprocessor 28 includes protocol communications data in the communications data that is transmitted to modem 16, and strips protocol communications data from the communications data received from the modem 16 before transmitting the rest of the communications data to the console port 24. If a LOCAL COPY signal, which is controlled by an operator at the remote services console 10, is asserted, the communications to and from the console port 24 is also sent to the console terminal 14. No communications data is transmitted to the communications port 26, and any communications data received from the communications port 26 is blocked.

With reference to Fig. 3B, when the USER PORT signal is negated, CPU/terminal multiplexer 84 couples the C REC DATA LOC (CPU receive data local) data signal from the console port 24 to one input of AND gate 100 as a C REC RD DATA (CPU receive read data) signal. Since the USER PORT signal is negated, AND gate 100 (Fig. 3A) is enabled to couple the C REC RD DATA (CPU receive read data) signal as the C(R) computer receive signal to an input terminal of the CPU USART 61. Since the R USER signal is negated, AND gate 102 is disabled, the C(R) computer receive data signal represents, in serial form, the communications data received from the console port 24.

Since the R USER remote user signal is negated, the timing signal multiplexer is enabled to couple the RCLK receive clock and TCLK transmit clock synchronization signals from CPU/terminal baud rate generator to the CPU USART as the RUR receive and RUT transmit timing signals, respectively. The CPU USART 61 receives and latches the serial C(R) signals in response to the RCLK receive clock synchronization signal. After the CPU USART 61 has received eight data bits, it transmits INT REQ interrupt request signals to the interrupt decoder 90 indicating that it has communications data for the microprocessor 28. The interrupt decoder 90 then interrupts the microprocessor 28.

When the microprocessor 28 is prepared to accept the interrupt, it transmits A(15:13) address signals over lines 55 to decoder 60 enabling it to assert the CCE computer communications enable signal, and an A(0) address signal over one of lines 53 which indicates that the transfer is of communications data, and asserts the RD read enable signal. In response, the CPU USART transmits the byte of communications data to the microprocessor 28 as D(7:0) data signals.

When the microprocessor is to send a byte of communications data to the modem to be transmitted to the remote services center 20, which communications data may constitute communications data from the console port 24 or protocol data, the microprocessor 28 transmits A(15:13) address signals over lines 55 to decoder 60 which enables the decoder to assert the MCE modem communications enable signal, an A(0) address signal over one of lines 53 which indicates that the transfer is of communications data and asserts the WRT write enable signal. When the microprocessor 28 places the D(7:0) data signals on lines 53, the modem USART 63 receives them. In response to the MCLK modem clock signal, the modem USART 63 transmits, as an m(X) modem transmit signal, communications signals representative of the sequential data bits of the communications data byte provided by the microprocessor 28. In addition, the modem USART 63 generates M RTS modem request-to-send and M DTR modem data-terminal-ready signals corresponding to the RTS request-to-send and DTR data-terminal-ready signals in the RS-232-C signalling protocol.

The M(X) modem transmit, M RTS modem request-to-send and M DTR modem data-terminal-ready signals are coupled to modem/communications port multiplexer 85 (Fig. 3B). Since the USER PORT signal is negated, AND gate 94 is de-energized, negating the C REM computer remote signal. As a result, the multiplexer 85 couples the M(X) modem transmit signal to the drivers 92 as an M TXD SEC modem transmit data secure signal, and the drivers 92 couple the signal to the modem 16 as an M XMIT DATA (X) modem transmit data (transmitted) signal. In addition, the multiplexer couples the M RTS modem request-to-send and M DTR modem data-terminal-ready signals to drivers 92 as the M RTS SEC modem request-to-send secure and M DTR SEC modem data-terminal-ready secure signals, respectively. In response, the drivers 92 transmit M RTS (X) modem request-to-send (transmitted) and M DTR (X) modem data-terminal-ready (transmitted) signals, respectively, to the modem 16.

In addition, the modem/communications port multiplexer 85 receives M REC DATA LOC modem receive data local signal from the modem 16 (Fig. 1). This signal corresponds to communications data from the modem 16. With reference to Fig. 3B, since the C REM computer remote signal is negated, the M REC DATA LOCAL modem receive data local signal is coupled to the modem USART 63 (Fig. 3A) as an M(R) modem receive signal. The modem USART 63, in response to the MCLK modem clock signal from modem baud rate generator 65, sequentially latches the serial communications data carried by the M(R) modem receive signal. When a byte of communications data has been received, the modem USART 63 transmits encoded INT REQ interrupt request signals to interrupt decoder 90 indicating that, and the interrupt decoder 90 interrupts the microprocessor 28.

When the microprocessor is ready to accept the interrupt, it transmits A(15:13) address signals over lines 55 to decoder 60 enabling the decoder to generate the MCE modem communications enable signal, which enables the modem USART 63, an A(0) address signal indicating that the transfer is of communications data, and asserts the RD read enable signal. In response, the modem USART 63 transmits the communications data to the microprocessor 28 as D(7:0) data signals over lines 53.

The microprocessor 28 strips any protocol data from the incoming communications data and transmits the remainder to the console port 24 (Fig. 1). In particular, when the microprocessor 28 is to send communications to the console port 24, it transmits A(15:13) address signals over lines 55 to decoder 60. In response, the decoder asserts the CCE computer communications enable signal, which enables CPU USART 61. In addition, the microprocessor 28 transmits an A(0) address signal which indicates that the transfer to the CPU USART 61 is of communications data and asserts the WRT write enable signal. The microprocessor then transmits the communication data as D(7:0) data signals on lines 53.

The CPU USART 61 then receives the communications data from lines 53. In response to the RUT CLK transmit synchronizing signal from timing signal multiplexer 82, the CPU USART shifts out the communications data in serial form as a C(X) computer transmit signal. With reference to Fig. 3B, the C(X) computer transmit signal is coupled to the CPU/terminal multiplexer 84, which couples the signal as a C XMIT DATA computer transmit data signal to drivers 92. The drivers then couple the signal to the console port 24 as a C XMIT DATA (X) computer transmit data (transmitted) signal.

Communication data from the terminal 14 is received as a serial T XMIT DATA LOC terminal transmit data local signal, which is received in the CPU/terminal multiplexer 84. Since the USER PORT signal is negated, the multiplexer 84 couples the T XMIT DATA LOC terminal transmit data local signal to the terminal USART 62 as a serial T(R) terminal received signal. The terminal USART 62 receives the T(R) terminal received signal in synchronism with the RUR CLK receive clock signal from the CPU/terminal baud rate generator 64. When a byte of communications data has been received, the terminal USART 62 signals an interrupt request to interrupt decoder 90 in the same manner as the CPU USART. The microprocessor 28 responds to the interrupt in the same way that it responds to interrupts from the CPU USART 61 and modem USART 63 and retrieved communications therefrom as described above, except that the A(15:13) address signals transmitted by the microprocessor 28 enable the decoder 60 to generate the TCE terminal communications enable signal. The microprocessor 28 then transmits the communications data to the remote services center 20 (Fig. 1) through modem USART 63 and modem 16 as described above. In addition, the microprocessor may transmit the communications data from the console terminal 14 to the console port 24 through the CPU USART 61 as described above.

When the microprocessor is to send communications data to the console terminal 14 (Fig. 1), it transmits D(7:0) data signals representing communications data to the terminal USART in a, similar manner as it transmits D(7:0) data signals to the other USARTs 61 and 63 as described above, except that the encoding of the A(15:13) address signals on lines 55 enable the decoder 60 to assert the TCE terminal communications enable signal. When the terminal USART 62 receives the communications data from the microprocessor 28, it, in response to the RUT CLK transmit clock signal, shifts out the communications data as a T(X) terminal transmitted signal.

The T(X) terminal transmitted signal is coupled to the CPU/terminal multiplexer 84 (Fig. 3B). Since the USER PORT signal is negated, the multiplexer 84 couples the T(X) signal to OR gate 91, which, in turn, couples the signal to drivers 92 as a T REC DATA terminal receive data signal. The drivers 92 transmit this signal to the console terminal 14 as a T REC DATA (X) terminal receive data (transmitted) signal.

The operator of the remote services console 10 may also provide that all communications data between the console port 24 and the remote services center 20 (Fig. 1) is also transmitted to the console terminal 14 when in the remote operating mode depicted in Fig. 2B. In the remote operating mode, the USER PORT signal is not asserted, and so the CPU/terminal multiplexer 84 would normally block the C REC DATA LOC console port receive data local signal from the console port from being transmitted to the terminal 14. However, if the operator enables a switch (not shown) a LOCAL COPY signal is asserted. The asserted LOCAL COPY signal, in turn, enables an AND gate 104 (Fig. 3B), which then couples the C REC DATA LOC console port receive data local signal from the console port to OR gate 91. Thus, communications data from the console port is copied to the terminal. If the computer, through the console port echoes, or repeats, all communications transmitted to it from, for example, the remote services center 20, the communications data originating at the remote services center 20 will also be transmitted to the console terminal 14.

3. Remote User Operation (Fig. 2C)

In the remote user operating mode, depicted in Fig. 2C, the USER PORT signal remains asserted, and the R USER remote user signal is also asserted. In that condition, the CPU/terminal multiplexer 84 will couple the same signals to drivers 92 as in the user port operating mode described above. Accordingly, the communications between the console port 24 and the console terminal 14 is the same as in the user port operating mode, as depicted in Fig. 2A.

With the assertion of the R USER remote user signal, inverter 97 disables AND gate 94, thereby negating the C REM computer remote signal. In this condition, modem/communications port multiplexer 85 couples the COMM XMIT DATA LOC communications port transmit data local signal from the communications port to one input of AND gate 102 as a COMM XMIT DATA communications port transmit data signal. Since the R USER remote user signal is asserted, AND gate 102 is enabled to couple the COMM XMIT DATA communications port transmit data signal as a C(R) computer receive signal to an input terminal of CPU USART 61.

In addition, the modem/communications port multiplexer 85 couples M REC DATA LOC modem receive data local signal as an M(R) modem receive signal to an input terminal of modem USART 63.

Since the R USER remote user signal is asserted, the timing signal multiplexer 82 is conditioned to couple the MCLK modem clock signal from modem baud rate generator 65 to the CPU USART 61 as the RUR and RUT receive and transmit synchronization signals. These synchronization signals synchronize the transfer of communications data signals between the communications port 26 (Fig. 1) and the remote services console 10.

After a byte (eight bits) of C(R) computer receive communications data is received by the CPU USART 61, it signals an interrupt request by transmitting a signal code over the INT REQ interrupt request signal lines. The interrupt decoder 90 then interrupts the microprocessor 28. In response to the interrupt, the microprocessor transmits the appropriate A(15:13) address signals over address lines 55 to enable the decoder 60 to assert the CCE computer communications enable signal and the appropriate A(0) address signal to indicate that the CPU USART 61 is to transmit communications data, and asserts the RD read enable signal. These signals enable the CPU USART 61 to transmit the communications data byte as D(7:0) data signals 53to the microprocessor 28.

Similarly, after a byte of M(R) modem receive communications data is received by the modem USART 63, that USART signals an interrupt request by transmitting a signal code over the INT REQ interrupt request signal lines. After the interrupt decoder 90 has interrupted the microprocessor 28, the microprocessor transmits the appropriate A(15:13) address signals over address lines 55 to enable the decoder 60 to assert the MCE modem communications enable signal, the appropriate A(0) address signal to indicate that the modem USART 63 is to transmit communications data, and asserts the RD read enable signal. In response, the modem USART 63 transmits the communications data byte as D(7:0) data signals 53 to the microprocessor 28.

When the microprocessor is to send a byte of communications data to the communications port 26 (Fig. 1), it transmits the appropriate A(15:13) address signals over lines 55 to enable decoder 60 to assert the CCE computer communications enable signal. In addition, the microprocessor transmits an A(0) address signal indicating that the data which is subsequently transmitted is communications data, and asserts the WRT write signal. The microprocessor places the communications data on the lines 53 as D(7:0) data signals.

After the CPU USART 61 receives the D(7:0) communications data signals, it, in response to the RUT CLK transmit clock timing signal, generates a serial C(X) computer transmit signal representative of the communications data signals from the microprocessor. The C(x) computer transmit signal is coupled to an AND gate 103, which is enabled by the asserted R USER remote user signal. AND gate 103 couples the C(X) computer transmit signals to modem/communications port multiplexer 85 as a COMM REC DATA communications port receive signal.

With reference to Fig. 3B, since the C REM computer remote signal is negated, the modem/ communications port multiplexer couples the COMM REC DATA communications port receive signal to drivers 92 as the M RXD SEC modem receive data secure signal. The drivers transmit that signal to the communications port 26 as a COMM REC DATA (X) communications port receive data (transmitted signal).

When the microprocessor is to send a byte of communications data to the modem 16, for transmission to remote services center 20 (Fig. 1), that communications data may correspond to data received from the communications port 26, or it may correspond to data which is required to implement a signalling protocol to minimize errors in transmission to the remote services center 20. In either event (with reference to Fig. 3A), the microprocessor transmits A(15:13) address signals over lines 55 that enable decoder 60 to assert the MCE modem communications enable signal, an A(0) address signal which indicates that the data is communications data, and asserts the WRT write enable signal. In response, when the microprocessor next transmits the D(7:0) data signals, which represent the communications data, the modem USART 63 receives and latches the data.

After the modem USART 63 has latched the D(7:0) data signals, in response to the MCLK modem clock signal from modem baud rate generator 65, the modem USART 63 generates a serial m(X) modem transmit signal representative of the communications data. The m(X) modem transmit signal is coupled to an input terminal of modem/communications port multiplexer 85 (Fig. 3B).

With reference to Fig. 3B, since the C REM computer remote signal is negated, the modem/ communications port multiplexer 85 couples the M(X) modem transmit signal as an M TXD SEC modem transmit data secure signal to drivers 92. The drivers 92 then transmit the M TXD SEC modem transmit secure signal to the modem 16 as an M XMIT DATA (X) modem transmit data (transmitted) signal. In a conventional manner the modem 16 generates signals representative of the M XMIT DATA (X) modem transmit data (transmitted) signal and transmits them over the public telecommunications network 22 to the remote services center 20 (Fig. 1). The remote services center 20 may strip the protocol portion of the communications data signal in a conventional manner and transfer the remaining communications data, which corresponds to the communications data transmitted by the communications port 26 to the remote services console 10.

With reference again to Fig. 3B, the modem USART 63 also generates the RS-232-C control signals M RTS modem request-to-send and M DTR modem data terminal ready. Since the C REM computer remote signal is negated, the modem/communications port multiplexer 85 couples these signal to drivers 92 as M RTS SEC modem request-to-send secure and M DTR SEC modem data-terminal-ready secure signals, respectively the drivers 92 couple these signal to the modem 16 as M RTS (X) modem request-to-send (transmitted) and M DTR (X) modem data terminal ready (transmitted) signals, respectively.

## Claims

1. A remote services console 10 for connection to a console port 24 of a digital data processing system, the console port being conventionally used to allow communication between a console terminal 14 and a central processing unit of the data processing system, and a remote services centre 20 for transferring communications data between the data processing system and the remote services centre, the remote services console including

port communications means 61 for connection to a port and including port receiving means for receiving communications data from the port and port transmitting means for transmitting communications data to the port,

remote communication means 63 for connection to the remote services centre 20 and including remote receiving means for receiving communications information, including communications data and commands, at least one of the commands comprising a protocol command, from the remote services centre and remote transmitting means for transmitting communications data to the remote services centre, and

processing means 28 connected to both said port communication means 61 and said remote communication means 63 for transferring communications data from the remote receiving means to the port transmitting means and from the port receiving means to the remote transmitting means, said processing means being enabled by the receipt of a protocol command to insert protocol data into the communications data transferred to said remote transmitting means and for removing protocol data from the communications data received from the remote receiving means, characterized in that

the data processing system also includes a communications port 26 and a console terminal 14, the communications port being conventionally used to allow asynchronous communication with the central processing unit of the data processing system, said remote services console operating in a plurality of operating modes and including:

A. said port communication means 61 arranged for alternate communication with either the console port 24 or the communications port 26;
B. console terminal communications means 62 connected to the processing means 28 and including console terminal transmitting means for transmitting communications data to said console terminal 14 and console terminal receiving means for receiving communications data from said console terminal; and
C. operating mode means providing said plurality of operating modes including a first mode for enabling communication between the remote services centre 20 and the communications port by way of the remote services console 10, and between the console port 24 and the console terminal 14, whereby the console terminal and the remote services centre may independently preform operations with said data processing system,

a second mode for enabling communication between the remote service centre 20 and the console port 24 by way of the remote services console 10, whereby the remote services centre may perform operations with said data processing system, said processing means 28 operating during the second mode to effect communication between the remote services centre 20 and the console port 24 in accordance with a predetermined protocol for maintaining the integrity of information exchanged therebetween,

a third mode for enabling communication between the remote services centre 20 and the communication port 26 by way of the console 10, and between the console port 24 and the console terminal 14 by way of the remote services console 10, whereby the console terminal and the remote services centre may independently perform operations with said data processing system, said processing means 28 operating during the third mode to effect communications between the remote services centre 20 and the communication port 26 in accordance with a predetermined protocol for maintaining the integrity of information exchanged therebetween.

2. A remote sevices console 10 as defined in claim 1 in which the operating mode is determined by an operating mode signal code provided by the operator, said operating mode means including:

A. console port/terminal multiplexer means connected to said port communication means, said console terminal communication means, and said processing means for selectively coupling communication data among said port communication means, said console terminal communication means, and said processing means in response to the operating mode signal code; and
B. remote/communications port multiplexer means connected to said remote communication means, said processing means, and said console terminal communication means for selectively coupling communication data among said remote communication means, said processing means, and said console terminal communication means in response to the operating mode signal code.

3. A remote services console as defined in claim 2 in which one of said operating mode signal codes identifies a user port operating mode, said user port operating mode signal code enabling said console port/terminal multiplexer means to couple communications data from said port receiving means to said console terminal transmitting means and from said console terminal receiving means to said port transmitting means, said one of said operating mode signal codes further enabling said remote/communications port multiplexer means to couple communications data from said port receiving means to said remote transmitting means and from said remote receiving means to said port transmitting means.

4. A remote services console as defined in claim 2 in which one of said operating mode signal codes identifies a remote operating mode, said remote operating mode signal code enabling said console port/terminal multiplexer means to couple communications data from said port receiving means to said processing means and from said processing means to said port transmitting means, said operating mode signal code further enabling said remote/communications port multiplexer means to couple communications data from said processing means to said remote transmitting means and from said remote receiving means to said processing means, thereby effecting communications between the console port and the remote services centre through the processing means.

5. A remote services console as defined in claim 4 in which one command from said remote services centre is a local copy command, said remote operating mode signal code enabling said console port/terminal multiplexer means to couple communications data following said local copy command from said processing means to said console terminal receiving means, thereby effecting communications between the console port and the remote services centre through the processing means.

6. A remote services console as defined in claim 4 further comprising an actuable local copy switch means for enabling transmission of communications data from said port transmitting means to said console terminal receiving mean: in response to actuation of said local copy switch means by an operator.

7. A remote services console as defined in claim 2 in which one of said operating mode signal codes identifies a remote user operating mode, said remote user operating mode signal code enabling said console port/terminal multiplexer means to couple communications data from said port receiving means to said console terminal transmitting means and from said console terminal receiving means to said port transmitting means, said remote user operating mode signal code further enabling said remote/communications port multiplexer means to couple communications data from said port receiving means to said processing means, from said processing means to said port transmitting means, from said remote receiving means to said processing means and from said processing means to said remote transmitting means, thereby effecting communications between the communications port and the remote services centre through the processing means.

8. A remote services console as defined in claim 2 further comprising actuable lockout switch means operable by an operator for disabling said remote/communications port multiplexer means thereby preventing transfer of communications data to said remote transmitting means.

9. The remote services console as in claim 1 further comprising means for disabling the remote communication means, thereby preventing communication between a remote source and the digital data processing system.

10. The remate services console as in claim 9 wherein said disabling means comprises a switch which may be actuated by an operator.

11. The remote services console as in claim 1 further comprising means for enabling communication between the console terminal and the remote services centre by way of the remote services console during the second mode of operation.

12. The remote services console as in claim 12 wherein the enabling means is responsive to a predetermined command transmitted from the remote services centre.

13. The remote services console as in claim 1 wherein said processing means includes means responsive to a protocol command, said protocol command enabling the processing means to effect communications in accordance with the protocol, thereby maintaining the integrity of information exchanged between the remote services console and the remote services centre.

14. The remote services console as in claim 13 wherein during the second or third mode of operation, the processing means inserts protocol data into and removes protocol data from the information passing between the remote services centre and the remote services console.

15. A method of controlling communications between a console port of a digital data processing system, a communications port of the digital data processing system, a console terminal and a remote services centre, the console port conventionally used to allow communication between a console terminal 14 and a central processing unit of the data processing system, the communications port conventionally used to allow communication between a telecommunications network 22 and the central processing unit of the data processing system, said method comprising the steps of:

enabling communication between the remote services centre and the communications port by way of the remote services console, and between console port and the console terminal during a first mode of operation, whereby the console terminal and the remote services centre may independently perform operations with said data processing system,

enabling communication between the remote services centre and the console port by way of the remote services console during a second mode of operation, whereby the remote services centre may perform operations with said data processing system and may exchange information in accordance with a predetermined protocol for maintaining the integrity of such information, and

enabling communication between the remote services centre and the communications port by way of the remote services console, and between the console port and the console terminal by way of the remote services console during a third mode of operation, whereby the console terminal and the remote services centre may independently perform operations with said data processing system, and the remote services centre and data processing system may exchange information in accordance with the predetermined protocol.

16. The method as in claim 15 wherein during the second mode of operation communication is enabled between the console terminal and the remote services centre by way of the remote services console, thereby allowing a local operator to monitor communications between the remote services centre and the data processing system.

17. The method as in claim 16 wherein communication between the console terminal and the remote services centre is enabled in response to a predetermined command transmitted from the remote services centre.

**Patentansprüche**

1. Fernbedienkonsole 10 zum Verbinden mit einem Konsolenanschluß 24 eines digitalen Datenverarbeitungssystems, wobei der Konsolenanschluß herkömmlicherweise verwendet wird, um eine Kommunikation zwischen einem Konsolenterminal 14 und einer zentralen Verarbeitungseinheit das Datenverarbeitungssystems zu ermöglichen, und mit einem Fernbedienzentrum 20 zum Übertragen von Kommunikationsdaten zwischen dem Datenverarbeitungssystem und dem Fernbedienzentrum, wobei die Fernbedienkonsole aufweist

eine Anschlußkommunikationseinrichtung 61, die mit einem Anschluß verbunden ist und die eine Anschlußempfangseinrichtung zum Empfangen von Kommunikationsdaten von dem Anschluß und eine Anschlußsendeeinrichtung zum senden von Kommunikationsdaten zu dem Anschluß aufweist,

eine Fernkommunikationseinrichtung 63 zum Verbinden mit dem Fernbedienzentrum 20, die eine Fernempfangseinrichtung zum Empfangen von Kommunikationsinformationen, die Kommunikationsdaten und Befehle enthalten, von denen zumindest einer ein Protokollkommando aufweist, von dem Fernbedienzentrum und eine Fernsandeeinrichtung zum Senden von Kommunikationsdaten zu dem Fernbedienzentrum enthält und

eine Verarbeitungseinrichtung 28, die mit der Anschlußkommunikationseinrichtung 61 und dar Fernkommunikationseinrichtung 63 zum Übertragen von Kommunikationsdaten von der Fernempfangseinrichtung zu der Anschlußsendeeinrichtung und von der Anschlußempfangseinrichtung zu der Fernsendeeinrichtung verbunden ist, wobei die Verarbeitungseinrichtung durch den Empfang eines Protokollkommandos aktiviert wird, Protokolldaten in die Kommunikationsdaten einzufügen, die zu der Fernsendeeinrichtung Übertragen warden, und wobei Protokolldaten aus den Kommunikationsdaten, die von der Fernempfangseinrichtung empfangen werden, entfernt werden, dadurch gekennzeichnet,

daß das Datenverarbeitungssystem auch einen Kommunikationsanschluß 26 und ein Konsolenterminal 14 enthält, wobei der Kommunikationsanschluß normalerweise verwendet wird, um asynchrone Kommunikation mit der zentralen Verarbeitungseinheit des Datenverarbeitungssytems zu ermöglichen, wobei die Fernbedienkonsole in einer Vielzahl von Betriebsmodi arbeitet und enthält:

A. die Anschlußkommunikationseinrichtung 61, ausgelegt für abwechselnde Kommunikation mit entweder dem Konsolenanschuß 24 oder dem Kommunikationsanschluß 26;

B. die Konsolenanschlußkommunikationseinrichtung 62, verbunden mit einer Verarbeitungseinrichtung 28 und aufweisend eine Konsolenanschlußsendeeinrichtung zum Senden von Kommunikationsdaten zu dem Konsolenanschluß 14 und eine Konsolenanschlußempfangseinrichtung zum Empfangen von Kommunikationsdaten von dem Konsolenanschluß; und

C. eine Betriebsmoduseinrichtung, die die Vielzahl von Betriebsmodi bereitstellt, welche umfassen einen ersten Modus zum Ermöglichen von kommunikation zwischen dem Fernbedienzentrum 20 und dem Kommunikationsanschluß über die Fernbedienkonsole 10 und zwischen dem Konsolenanschuß 24 und dem Konsolenterminal 14, wobei das Konsolenterminal und das Fernbedienzentrum unabhängig Operationen mit dem Datenverarbeitungssystem durchführen können,

einen zweiten Modus zum Ermöglichen einer Kommunikation zwischen dem Fernbedienzentrum 20 und dem Konsolenanschluß 24 über die Fernbedienkonsole 10, wobei das Fernbedienzentrum Operationen mit dem Datenverarbeitungssytem durchführt und die Verarbeitungseinrichtung 28 während des zweiten Modus arbeitet, um Kommunikationen zwischen dem Fernbedienzentrum 20 und dem Konsolenanschluß 24 in Übereinstimmung mit einem vorgegebenen Protokoll zum Beibehalten der Integrität der Informationen zu bewirken, die zwischen ihnen ausgetauscht werden, und

einen dritten Modus zum Ermöglichen einer Kommunikation zwischen dem Fernbedienzentrum 20 und dem Kommunikationsanschluß 26 über die Konsole 10 und zwischen dem Konsolenanschluß 24 und dem Konsolenterminal 14 über die Fernbedienkonsole 10, wobei der Konsolenanschluß und das Fernbedienzentrum unabhängig Operationen mit dem Datenverarbeitungssystem durchführen können und die Verarbeitungseinrichtung 28 während des dritten Modus arbeitet, um Kommunikationen zwischen dem Fernbedienzentrum und dem Kommunikationsanschluß 26 in Übereinstimmung mit einem vorgegebenen Protokoll zum Beibehalten der Integrität der Informationen zu bewirken, die zwischen ihnen ausgetauscht werden.

2. Fernbedienkonsole 10, wie in Anspruch 1 definiert, in der der Betriebsmodus durch einen Betriebsmodussignalcode, der vom Operator erzeugt wird, bestimmt wird, wobei die Betriebsmoduseinrichtung aufweist:

A. eine Konsolenanschluß/Terminal-Multiplexereinrichtung, die mit der Anschlußkommunikationseinrichtung, der Konsolenterminalkommunikationseinrichtung und der Verarbeitungseinrichtung verbunden istn zum selektiven Verbinden von Kommunikationsdaten zwischen der Anschlußkommunikationseinrichtung, der Konsolenterminalkommunikationseinrichtung und der Verarbeitungseinrichtung in Antwort auf den Betriebsmodussignalcode; und

B. eine Fern/Kommunikationanschluß-Multiplexereinrichtung, die mit der Fernkommunikationseinrichtung, der Verarbeitungseinrichtung und der Konsolenterminalkommunikationseinrichtung zum selektiven Koppeln von Kommunikationsdaten zwischen der Fernkommunikationseinrichtung, der Verarbeitungseinrichtung und der Konsolenterminalkommunikationseirichtung in Antwort auf den Betriebsmodussignalcode verbunden ist.

3. Fernbedienkonsole, wie in Anspruch 2 definiert, in der einer der Betriebsmodussignalcodes einem Benutzeranschlußbetriebsmodus identifiziert, wobei der Betriebsmodussignalcode für den Benutzeranschluß die Konsolenanschluß/Terminal-Multiplexereinrichtung aktiviert, Kommunikationsdaten von der Anschlußempfangseinrichtung zu der Konsolenterminalsendeeinrichtung und von der Konsolenterminalemfangseinrichtung zu der Anschlußsendeeinrichtung zu koppeln, wobei dieser eine Code der Betriebsmodussignalcodes weiterhin die Fern/Kommunikationsanschluß-Multiplexereinrichtung aktiviert, Kommunikationsdaten von der Anschlußemfangseirichtung zu der Anschlußsendeeinrichtung zu koppeln.

4. Fernbedienkonsole, wie in Anspruch 2 definiert, in der einer der Betriebsmodussignalcodes einen Fernbetriebsmodus identifiziert, wobei der Signalcode für den Fernbetriebsmodus die Konsolenanschluß/Terminal-Multiplexereinrichtung aktiviert, Kommunikationsdaten von der Anschlußempfangseinrichtung zu der Verarbeitungseinrichtung und von der Verarbeitungseinrichtung zu der Anschlußsendeeinrichtung zu koppeln, wobei dieser Betriebsmodussignalcode weiterhin die Fern/Kommunikationsanschluß-Multiplexereinrichtung aktiviert, Kommunikationsdaten von der Verarbeitungseinrichtung zu der Fernsendeeinrichtung und von der Fernempfangseinrichtung zu der Verarbeitungseinrichtung zu übertragen, wodurch Kommunikationen zwischen dem Konsolenanscluß und dem Fernbedienzentrum über die Verarbeitungseinrichtung bewirkt werden.

5. Fernbedienkonsole, wie in Anspruch 4 definiert, in der ein Kommando von dem Fernbedienzentrum ein Lokalkopierkommando ist und wobei der Signalcode für den Fernbetriebsmodus die Konsolanschluß/Terminal-Multiplexereinrichtung aktiviert, Kommunikationsdaten, die dem Lokalkopierkommando folgen, von der Verarbeitungseinrichtung zu der Konsolenterminalempfangseinrichtung zu übertragen, wodurch Kommunikationen zwischen dem Konsolenanschluß und dem Fernvedienzentrum über die Verarbeitungseinrichtung bewirkt werden.

6. Fernbedienkonsole, wie in Anspruch 4 definiert, die weiterhin aufweist eine stellbare Lokalkopierschaltereinrichtung zum Activieren einer Übertragung von Kommunikationsdaten von der Anschlußsendeeinrichtung zu der Konsolenterminalempfangseinrichtung in Antwort auf das Stellen der Lokalkopierschaltereinrichtung durch den Operator.

7. Fernbedienkonsole, wie in Anspruch 2 definiert, in der einer der Betriebsmodussignalcodes einen Fernbenutzerbetriebsmodus identifiziert, wobei der Betriebsmodussignalcode für den Fernbenutzer die Konsolenanschluß/Terminal-multiplexereinrichtung aktiviert, Kommunikationsdaten von der Anschlußempfangseinrichtung zu der Konsolenterminalsendeeinrichtung und von der Konsolenterminalempfangseinrichtung zu der Anschlußsendeeinrichtung zu übertragen, wobei der Betriebsmodussignalcode für den Fernbenutzer weiterhin die Fern/Kommunikationsanschluß-Multiplexereinricht ung aktiviert, Kommunikationsdaten von der Anschlußempfangseinrichtung zu der Verarbeitungseinrichtung, von der Verarbeitungseinrichtung zu der Anschlußsendeeinrichtung, von der Fernempfangseinrichtung zu der Verarbeitungseinrichtung und von der Verarbeitungseinrichtung zu der Fernsendeeinrichtung zu koppeln, wodurch Kommunikationen zwischen dem Kommunikationsanschluß und dem Fernbedienzentrum über die Verarbeitungseinrichtung bewirkt werden.

8. Fernbedienkonsole, wie in Anspruch 2 definiert, die weiterhin aufweist eine stellbare Sperrschaltereinrichtung, die von dem Operator zum Deaktivieren der Fern/Kommunikationsanschluß-Multiplexereinrichtung betätigt wird, wodurch ein Transfer von Kommunikationsdaten zu der Fernsendeeinrichtung verhindert wird.

9. Fernbedienkonsole, wie in Anspruch 1, weiterhin aufweisend eine Einrichtung zum Deaktivieren der Fernkommunikationseinrichtung, wodurch eine Kommunikation zwischen einer Fernquelle und dem digitalen Datenverarbeitungssystem verhindert wird.

10. Fernbedienkonsole, wie in Anspruch 9, worin die Deaktivierungseinrichtung einen Schalter aufweist, der von einem Operator gestellt werden kann.

11. Fernbedienkonsole, wie in Anspruch 1, weiterhin aufweisend eine Einrichtung zum Deaktivieren der Kommunitation zwischen dem Konsolenterminal und dem Fernbedienzentrum über die Fernbedienkonsole während des zweiten Betriebsmodus.

12. Fernbedienkonsole, wie in Anspruch 12, worin die Aktivierungseinrichtung auf ein vorgegebenes Kommando, das von dem Fernbedienzentrum übertragen wird, reagiert.

13. Fernbedienkonsole, wie in Anspruch 1, worin die Verarbeitungseinrichtung eine Einrichtung enthält, die auf ein Protokollkommando reagiert, wobei das Protokollkommando die Verarbeitungseinrichtung aktiviert, Kommunikationen in Übereinstimmung mit dem Protokoll zu bewirken, wodurch die Integrität der Informationen, die zwischen der Fernbedienkonsole und dem Fernbedienzentrum ausgetauscht werden, aufrechterhalten wird.

14. Fernbedienkonsole, wie in Anspruch 13, worin während des zweiten oder dritten Betriebsmodus die Verarbeitungseinrichtung Protokolldaten in die Informationen einfügt und Protokolldaten von den Informationen entfernt, die zwischen dem Fernbedienzentrum und der Fernbedienkonsole übertragen werden.

15. Verfahren zum Steuern von Kommunikationen zwischen einem Konsolenanschluß eines digitalen Verarbeitungssystems, eines Kommunikationsanschlusses des digitalen Verarbeitungssystems, eines Konsolenterminales und eines Fernbedienzentrums, wobei der Konsolenanschluß normalerweise verwendet wird, Kommunikation, zwischen einem Konsolenanschluß 14 und einer zentralen Verarbeitungseinheit des Datenverarbeitungssystems zu ermöglichen, und des Kommunikationsanschluß normalerweise verwendet wird, Kommunikationen zwischen einem Telekommunikationsnetzwerk 22 und der zentralen Verarbeitungseinheit des Datenverarbeitungssystems zu erlauben, wobei das verfahren die folgenden Schritte aufweist:

Aktivieren der Kommunikation zwischen dem Fernbedienzentrum und dem Kommunikationsanschluß über die Fernbedienkonsole und zwischen dem Konsolenanschluß und dem Konsolenterminal während eines ersten Betriebsmodus, wobei das Konsolenterminal und das Fernbedienzentrum unabhängig Operationen mit dem Verarbeitungssystem durchfüren können,

Aktivieren der Kommunikation zwischen dem Fernbedienzentrum und dem Konsolenanschluß über die Fernbedienkonsole während eines zweiten Betriebsmodus, wobei das Fernbedienzentrum Operationen mit dem Datenverarbeitungssystem durchführen kann und Informationen in Übereinstimmung mit einem vorgegebenen Protokoll zum Beibehalten der Integrität solcher Informationen austauschen kann, und

Aktivieren der Kommunikation zwischen dem Fernbedienzentrum und dem Kommunikationsschluß über die Fernbedienkonsole und zwischen dem Konsolenanschluß und dem Konsolenterminal über die Fernbedienkonsole während eines dritten Betriebsmodus, wobei das Konsolenterminal und das Fernbedienzentrum unabhängig Operationen mit dem Datenverarbeitungssystem durchführen kann und das Fernbedienzentrum und das Datenverarbeitungssystem Informationen in Übereistimmung mit dem vorgegebenen Protokoll austauschen kann.

16. Vergahren nach Anspruch 15, worin während des zweiten Betriebsmodus Kommunikation zwischen dem Konsolenterminal und dem Fernbedienzentrum über die Fernbedienkonsole aktiviert wird, wodurch einem lokalen Operator ermöglicht und dem Datenverarbeitungssystem zu überwachen.

17. Verfahren nach Anspruch 16, worin Kommunikation zwischen dem Konsolenterminal und den Fernbedienzentrum in Antwort auf ein vorgegebenes Kommando das von dem Fernbedienzentrum übertragen wird, aktiviert wird.

## Revendications

1. Console de téléservices (10) pour connexion à un point d'accès à la console (24) d'un système de traitement de données numériques, le point d'accès à la console étant utilisé de façon classique pour permettre une communication entre un terminal de console (14) et une unité centrale de traitement du système de traitement de données et un centre de téléservices (20) pour transférer des données de communications entre le système de traitement de données et le centre de téléservices, la console de téléservices incluant

des moyens de communication des points d'accès (61) pour connexion à un point d'accès et incluant des moyens de réception des points d'accès pour recevoir les données de communications venant des points d'accès et des moyens de transmission des points d'accès pour transmettre les données de communications vers le point d'accès.

des moyens de télécommunication (63) pour connexion au centre de téléservices( 20) et incluant des moyens de téléréception pour recevoir l'information de communication, incluant des données de communications et des commandes, une des commandes au moins comprenant une commande de protocole, venant du centre de téléservices et des moyens de télétransmission pour transmettre des données de communications au centre de téléservices, et

des moyens de traitement (28) connectés à la fois auxdits moyens de communication des points d'accès (61) et auxdits moyens de communication (63) pour transférer les données de communications provenant des moyens de téléréception vers les moyens de transmission des points d'accès et provenant des moyens de réception des points d'accès vers les moyens de télétransmission, lesdits moyens de traitement étant validés par la réception d'une commande de protocole pour insérer les données de protocole dans les données de communications transférées vers lesdits moyens de télétransmission et pour éliminer les données de protocole des données de communications reçues des moyens de téléréception, caractérisée en ce que

le système de traitement de données inclut aussi un point d'accès aux communications (26) et un terminal de console (14), le point d'accès aux communications étant utilisé de façon clasique pour permettre une communication asynchrone avec l'unité central de traitement du système de traitement des données, ladite console de téléservices opérant selon une pluralité de modes de fonctionnement et incluant :

A. Lesdits moyens de communication des points d'accès (61) disposés pour une communication en alternance soit avec le point d'accès à la console (24) soit avec le point d'accès aux communications (26).

B. Des moyens de communication de terminal de console (62) connectés aux moyens de traitement (28) et incluant des moyens de transmission de terminal de console pour transmettre les données de communication vers ledit terminal de console (14) et des moyens de réception de terminal de console pour recevoir des données de communications provenant ducit terminal de console ; et

C. Des moyens de mode de fonctionnement fournissant ladite pluralité des modes de fonctionnement incluant un premier mode pour permettre une communication entre le centre de téléservices (20) et le point d'accès aux communications via la console de téléservices (10), et entre le point d'accès à la console (24) et le terminal de console (14), par lequel le terminal de console et le centre de téléservices peuvent effectuer de façon indépendante des opérations avec ledit système de données,

un second mode pour permettre une communication entre le centre de téléservices (20) et le point d'accès à la console (24) via la console de téléservices (10),par laquelle le centre de téléservices peut effectuer des opérations avec ledit système de traitement de données, lesdits moyens de traitement (28) fonctionnant pendant le second mode pour effectuer des communications entre le centre de téléservices (20) et le point d'accès à la console (24) selon un protocole prédéterminé pour maintenir l'intégrité des informations échangées entre eux,

un troisième mode pour permettre une communication entre le centre de téléservices (20) et le point d'accès aux communications (26) via la console (10) et entre le point d'accès à la console (24) et le terminal de console (14) via la console de téléservices (10), par laquelle le terminal de console et le centre de téléservices peuvent effectuer des opérations de façon indépendante avec ledit système de traitement de données, lesdits moyens de traitement (28) fonctionnant pendant le troisième mode pour effectuer des communications entre le centre de téléservices (20) et le point d'accès aux communications (26) selon un protocole prédéterminé pour maintenir l'intégrité des informations échangées entre eux.

2. Console de téléservices (10) selon la revendication 1 dans laquelle le mode de fonctionnement est déterminé par un code de signaux du mode de fonctionnement prévu par l'opérateur, lesdits moyens de mode de fonctionnement incluant :

A. Des moyens multiplexeurs point d'accès à la console connectés auxdits moyens de communication des points d'accès, auxdits moyens de communication du terminal de console, et auxdits moyens de traitement pour coupler de façon sélective les données de communications parmi lesdits moyens de communication des points d'accès , lesdits moyens de communication du terminal de console et lesdits moyens de traitement en réponse au code de signaux du mode de fonctionnement ; et

B. Des moyens multiplexeurs télécommunications/point d'accès aux communications connectés auxdits moyens de télécommunication, auxdits moyens de traitement et auxdits moyens de communication du terminal de console pour coupler de façon sélective les données de communications parmi lesdits moyens de télécommunication, lesdits moyens de traitement et lesdits moyens de communication du terminal de console en réponse au code de signaux du mode de fonctionnement.

3. Console de téléservices selon la revendication 2, dans laquelle un desdits codes de signaux du mode de fonctionnement identifie un mode de fonctionnement de point d'accès d'un utilisateur, ledit code de signaux du mode de fonctionnement du point d'accès d'un utilisateur permettant auxdits moyens multiplexeurs point d'accès/terminal de la console de coupler des données de communications provenant lesdits moyens de réception de point d'accès vers lesdits moyens de transmission de terminal de console et provenant desdits moyens de réception de terminal de console vers lesdits moyens de transmission de point d'accès, l'un desdits codes de signaux des modes de fonctionnement permettant de plus auxdits moyens multiplexeurs télécommunications/point d'accès aux communications de coupler les données de communications provenant desdits moyens de réception de point d'accès vers lesdits moyens de télétransmission et provenant desdits moyens de téléréception vers lesdits moyens de transmission de point d'accès.

4. Console de téléservices selon la revendication 2, dans laquelle un desdits codes de signaux des modes de fonctionnement identifie un mode de téléfonctionnement, ledit code de signaux du mode de téléfonctionnement permettant auxdits moyens multiplexeurs point d'accès à la console/terminal de coupler les données de communications provenant desdits moyens de réception de point d'accès vers lesdits moyens de traitement et provenant desdits moyens de traitement vers lesdits moyens de télétransmission ledit code de signaux du mode de fonctionnment permettant de plus auxdits moyens multiplexeurs télécommunications/point d'accès aux communications de coupler les données de communications provenant desdits moyens de traitement vers lesdits moyens de télétransmission et provenant desdits moyens de téléréception vers lesdits moyens de traitement effectuant de ce fait des communications entre le point d'accès à la console et le centre de téléservices à travers les moyens de traitement.

5. Console de téléservices selon la revendication 4 dans laquelle une commande venant dudit centre de téléservices est une commande de copie locale, ledit code de signaux du mode de téléfonctionnement permettant auxdits moyens multiplexeurs point d'accès à la console/terminal de coupler les données de communications suivant ladite commande de copie locale provenant desdits moyens de traitement vers lesdits moyens de réception de terminal de console, effectuant de ce fait des communications entre le point d'accès à la console et le centre de téléservices à travers les moyens de traitement.

6. Console de téléservices selon la revendication 4 comprenant de plus, des moyens activables de commutation de copie locale pour permettre une transmission des données de communications provenant desdits moyens de transmission de point d'accès vers lesdits moyens de réception du terminal de console en réponse à l'activation desdits moyens de commutation de copie locale par un opérateur.

7. Console de téléservices selon la revendication 2 dans laquelle l'un desdits codes de signaux des modes de fonctionnement identifie un mode de téléfonctionnement d'un utilisateur, ledit code de signaux du mode de téléfonctionnement d'un utilisateur permettant auxdits moyens multiplexeurs point d'accès à la console/terminal de coupler les données de communications provenant desdits moyens de réception de point d'accès vers lesdits moyens de transmission de terminal de console et provenant desdits moyens de réception de terminal de console vers lesdits moyens de transmission de point d'accès, ledit code de signaux du mode de téléfonctionnement d'un utilisateur permettant, en outre, auxdits moyens multiplexeurs télécommunications/ point d'accès aux communications de coupler les données de communications provenant desdits moyens de réception de point d'accès vers lesdits moyens de traitement, provenant desdits moyens de traitement auxdits moyens de transmission de point d'accès, desdits moyens de téléréception vers lesdits moyens de traitement et provenant desdits moyens de traitement vers lesdits moyens de télétransmission, effectuant de ce fait des communications entre le point d'accès aux communications et le centre de téléservices à travers les moyens de traitement.

8. Console de téléservices selon la revendication 2 comprenant de plus des moyens activables de commutation de verrouillage pouvant être actionnés par un opérateur pour invalider lesdits moyens multiplexeurs télécommunications/point d'accès aux communications empêchant de ce fait le transfert des données de communications vers lesdits moyens de télétransmission.

9. Console de téléservices selon la revendication 1 comprenant de plus des moyens pour invalider les moyens de télécommunication, empêchant de ce fait une communication entre une source éloignée et le système du traitement de données numériques.

10. Console de téléservices selon la revendication 9 dans laquelle lesdits moyens d'invalidation comprennent un commutateur qui peut être actionné par un opérateur.

11. Console de téléservices selon la revendication 1 comprenant de plus des moyens pour permettre une communication entre le terminal de console et le centre de téléservices à l'aide de la console de téléservices pendant le second mode de fonctionnement.

12. Console de téléservices selon la revendication 1 dans laquelle les moyens de validation sont sensibles à une commande prédéterminée transmise à partir du centre de téléservices.

13. Console de téléservices selon la revendication 1 dans laquelle lesdits moyens de traitement incluent des moyens sensibles à une commande de protocole, ladite commande de protocole permettant aux moyens de traitement d'effectuer des communications selon le protocole, maintenant de ce fait l'intégrité de l'information échangée entre la console de téléservices et le centre de téléservices.

14. Console de téléservices selon la revendication 13 dans laquelle, pendant les second et troisième modes de fonctionnement, les moyens de traitement insèrent les données de protocole dans et retirent les données de protocole de l'information passant entre le centre de téléservices et la consoles de téléservices.

15. Procédé de commande des transmissions entre un point d'accès à la console d'un système de traitement de données numériques, un point d'accès aux communications du système de traitement de données numériques, un terminal de console et un centre de téléservices, le point d'accès à la console utilisé classiquement pour permettre une communication entre un terminal de console (14) et une unité centrale de traitement du système de traitement de données, le point d'accès aux communications utilisé classiquement pour permettre une communication entre un réseau de télécommunications (22) et l'unité centrale de traitement du système du traitement de données, ledit procédé comprenant les étapes de :

permettre une communication entre le centre de téléservices et le point d'accès aux communications via la console de téléservices, et entre le point d'accès à la console et le terminal de console pendant un premier mode de fonctionnement, par quoi le terminal de console et le centre de téléservices peuvent effectuer de façon indépendante des opérations avec ledit système de traitement de données,

permettre une communication entre le centre de téléservices et le point d'accès à la console via la console de téléservices pendant un second mode de fonctionnement, par quoi le centre de téléservices peut effectuer des opérations avec ledit système de traitement de données et peut échanger une information selon un protocole prédéterminé pour conserver l'intégrité d'une telle information, et

permettre une communication entre le centre de téléservices et le point d'accès aux communications via la console de téléservices, et entre le point d'accès à la console et le terminal de console via la console de téléservices pendant un troisième mode de fonctionnement, par quoi le terminal de console et le centre de téléservices peuvent effectuer de façon indépendante des opérations avec ledit système de traitement de données, et le centre de téléservices et le système de traitement de données peuvent échanger une information selon le protocole prédéterminé.

16. Procédé selon la revendication 15 dans lequel pendant le second mode de fonctionnement, une communication est autorisée entre le terminal de console et le centre de téléservices via la console de téléservices, permettant de ce fait à un opérateur local de contrôler les communications entre le centre de téléservices et le système de traitement de données.

17. Procédé selon la revendication 16 dans lequel une communication est permise entre le terminal de console et le centre de téléservices en réponse à une commande prédéterminée transmise à partir du centre de téléservices.

PUBLIC
TELECOMMUNICATIONS
NETWORK 22

COMPUTER
SYSTEM
12

COMM
PORT 26

CONSOLE
PORT 24

REMOTE
SERVICES
CONSOLE
10

MODEM
16

REMOTE
SERVICE
CENTER
20

CONSOLE
TERMINAL
14

FIG. I

EP 0 315 653 B1

FIG.2A

FIG.2C

FIG.2B

EP 0 315 653 B1

FIG.3A

FIG. 3B

EP 0 315 653 B1